# EUROPEAN PATENT SPECIFICATION

(11) **EP 0 969 920 B1**
(45) Date of publication and mention of the grant of the patent: **08.08.2001**
(21) Application number: 98909640.9
(22) Date of filing: 16.03.1998
(51) Int. Cl.: B01J 19/08

(54) **DEVICE FOR MAGNETIC FLUID TREATMENT**
VORRICHTUNG ZUR MAGNETISCHEN BEHANDLUNG VON FLUIDEN
DISPOSITIF PERMETTANT LE TRAITEMENT MAGNETIQUE DE FLUIDES

(30) Priority: 14.03.1997 GB 9705282
(43) Date of publication of application: 12.01.2000
(73) Proprietor: Rossenglen Limited, Glasgow G1 3AH (GB)
(72) Inventor: MCFADZEAN, Richard Aird, Glasgow G12 8JD (GB)
(74) Representative: Murnane, Graham John
(86) International application number: GB9800775
(87) International publication number: WO9841319

(56) References cited:
- DE-A- 19 509 925
- GB-A- 805 484
- GB-A- 2 160 855
- US-A- 3 349 354
- US-A- 4 569 737
- US-A- 5 364 536

## Description

This invention relates to the use of magnetic fields in the ionisation or other treatment of gaseous or liquid fluids, such as treatment of hydrocarbon based fuels prior to their consumption by a combustion apparatus.

There are in use many types of combustion apparatus which burn hydrocarbon fuels. Boilers which consume natural gas, LPG gas or fuel oil may be used to heat buildings or produce electricity, while engines which consume petrol, diesel or LPG may be used to obtain motive power. Devices which apply magnetic fields to fuel before combustion are known to improve efficiency and reduce emissions of harmful gases. For instance, United States Patent No. 3,349,354 discloses a device for treating a hydrocarbon fuel using a magnetic field. In this invention a passage for the fuel to flow through is provided with bar type magnets surrounding the circumference. The magnets subject the fuel to a magnetic field as it flows through the passage.
However there remains a problem of maximising the magnetic field in throughout the chamber in which the fuel or other fluid is treated. If magnets are applied outside the chamber, the gap between opposing magnets is at least as large as the external diameter of the chamber, leading to a reduced field at the centre of the chamber.

It is an object of the present invention to provide an apparatus for the treatment of fuel which produces a high magnetic field at the centre of the chamber.

According to a first aspect of the present invention there is provided an apparatus for the treatment of fuel comprising
- a chamber having a first end and a second end and a longitudinal axis extending from the first end to the second end,
- a fuel inlet and a fuel outlet each communicating with said chamber,
- at least three magnets arranged radially about the longitudinal axis and adapted to apply a magnetic field within said chamber, wherein said magnets are substantially cuboid in shape having a thickness less than the two longer sides of the magnet, wherein the magnets are arranged such that a first long side is parallel to said longitudinal axis and a second long side extends radially from said longitudinal axis, wherein each face bounded by the first and second long sides is a north or south pole face, the magnets being arranged such that the north pole of each magnet faces the south pole of the adjacent magnet, and the south pole of each magnet faces the north pole of the adjacent magnet.

According to a second aspect of the present invention there is provided an apparatus for the treatment of fuel comprising
- a chamber having a first end and a second end and a main longitudinal axis extending from the first end to the second end
- a fuel inlet and a fuel outlet each communicating with said chamber,
- a plurality of secondary axes extending within the chamber parallel to the main longitudinal axis,
- at least three magnets arranged radially about each said secondary axis and adapted to apply a magnetic field within said chamber, wherein said magnets are substantially cuboid in shape having a thickness less than the two longer sides of the magnet, wherein the magnets are arranged such that a first long side is parallel to said secondary axis and a second long side extends radially from said secondary axis, wherein each face bounded by the first and second long sides is a north or south pole face, the magnets being arranged such that the north pole of each magnet faces the south pole of the adjacent magnet, and the south pole of each magnet faces the north pole of the adjacent magnet.

Preferably said magnets are spaced equidistantly about said axis.

Preferably the device comprises one or more layers of magnets, each layer comprising at least three magnets arranged radially about an axis. Preferably the magnets in each layer are substantially planar and arranged to be coplanar with the magnets in the other layers. Preferably the orientation of the magnets in each layer is the reverse of that of the magnets in each adjacent layer, such that each north pole of a magnet in one layer is adjacent to a south pole of a magnet in an adjacent layer.

The edge face of each magnet adjacent to the axis may be profiled to aid interconnection of the magnets. The profiling may take the form of mitring or chamfering on one or both sides of the edge face. Alternatively the profiling may take the form of an arcuate channel extending along the edge face and adapted to engage with a spine member extending along an axis of the device.

In a preferred embodiment there are four magnets in each layer arranged in a cruciform pattern.

Preferably the chamber is bounded by a casing of impervious material. Preferably the casing is of non-magnetic material, for example aluminium or plastics material.

An embodiment of the invention will now be described, by way of example only, with reference to the accompanying figures, where:
Fig. 1 is a perspective view of a device according to a first aspect of the invention;
Fig. 2 is a transverse sectional view through the device of Fig. 1;
Fig. 3 is a perspective view of an apparatus according to a second aspect of the invention;
Figs. 4 to 7 are transverse sectional views through the device of the invention showing different arrangements of magnets;
Fig. 8 is a transverse sectional view through the apparatus of Fig. 3 showing the magnetic field strength;
Fig. 9 is a transverse sectional view through the device according to a third aspect of the invention;
Figs. 10 to 14 are transverse sectional views through the device according to a fourth aspect of the invention showing different arrangements of magnets; and
Fig. 15 is a transverse sectional view through the device according to a fifth aspect of the invention.

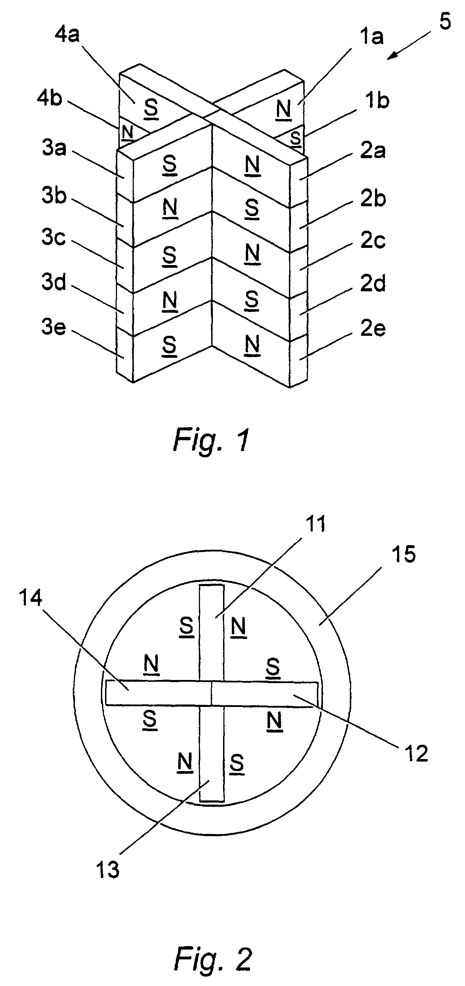

Referring to Fig. 1 there is shown a device 5 for treatment of a fluid comprising a number of layers of rectangular cuboid magnets. In this case there are shown five layers. The top layer comprises four magnets 1a, 2a, 3a, 4a arranged in a cruciform pattern. Each magnet has a north pole at one major face and a south pole at the other major face. The magnets 1a, 2a, 3a, 4a in the top layer are arranged such that the north poles face in a clockwise direction when viewed from above.

The second layer from the top comprises four magnets 1b, 2b, 3b, 4b arranged in a cruciform pattern. Each magnet in the second layer is arranged to be coplanar with a magnet in the top layer. However the magnets 1b, 2b, 3b, 4b in the second layer are arranged such that the north poles face in a counter-clockwise direction when viewed from above, i.e. their polarity is reversed when compared to the top layer.

Succeeding layers of magnets 1-4c, 1-4d, 1-4e each have their polarity reversed in comparison to the adjacent layer.

Fig. 2 shows a section through a device similar to that of Fig. 1. The four magnets 11, 12, 13, 14 of a layer are shown held in a cruciform arrangement by a tubular casing member 15. In order that the cruciform has legs of equal length so that it fits in a circular cylinder, magnets 12 and 14, which abut each other, are longer than magnets 11 and 13, which each abut magnets 12 and 14 at the joint. In order to make the layers of magnets more stable it has been found beneficial to ensure that in the next layer magnets 11 and 13 are longer and abut each other, while magnets 12 and 14 are shorter.

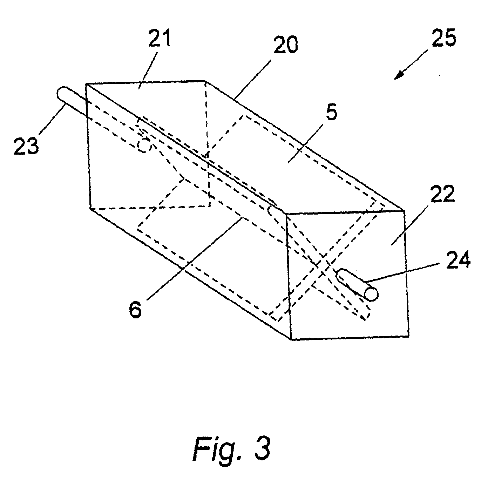

Fig. 3 shows an apparatus 25 for the treatment of a fluid such as fuel gas, petrol, liquid chemical or blood. The fluid enters a chamber 20 at inlet 23 in end wall 21. Inside the chamber is a device 5 comprising radially arranged magnets. The fluid passes through the chamber within a magnetic field induced by the magnetic device 5. The magnetic field is strongest at the centre 6 of the device 5, close to the central axis of the chamber 20. The fluid exits the chamber 20 through the outlet 24 in end wall 22. The outlet is positioned in the centre of the end wall 22 on the central axis of the chamber 20, so that the fluid is drawn through the outlet from the centre of the chamber where the magnetic field is strongest. In this way the effect on the fluid is maximised. Although Fig. 3 shows a square-section chamber 20, it is to be understood that other shapes are possible, such as a cylindrical chamber.

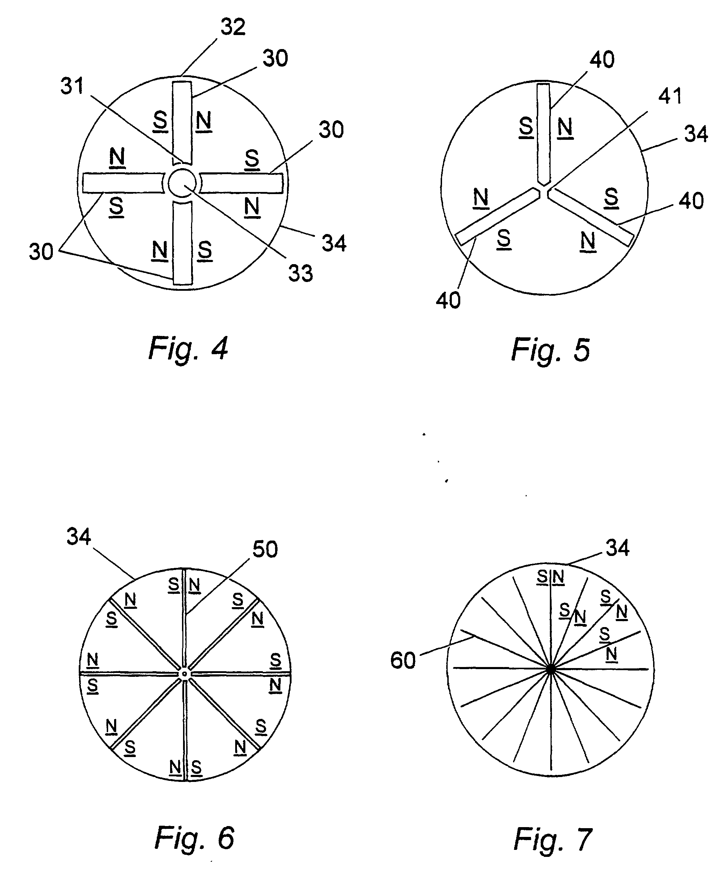

Fig. 4 shows a section through a device of the invention having four magnets 30 in each layer. The inner edge surface 31 of each magnet is formed with an arcuate channel which fits around a spine member 33.
In this way all four magnets 30 have the same length. The outer edge surfaces 32 may be profiled to fit within the chamber or sleeve within which the device is to be fitted. In Fig. 4 the outer edge surfaces 32 are shown with a convex arcuate profile, adapted to mate with the cylindrical sleeve 34.

Fig. 5 shows a section through a device of the invention having three magnets 40 in each layer. The inner edge surface 41 of each magnet is bevelled to form an internal angle of 120°, so that the magnets fit together at a point. In this way all three magnets 40 have the same length.

Fig. 6 shows a section through a device of the invention having eight magnets 50 in each layer, while Fig. 7 shows a section through a device of the invention having sixteen magnets 60 in each layer. There is no theoretical limit to the number of magnets which may be arranged radially about the axis, although in practice manufacturing limitations would prevent very large numbers of magnets.

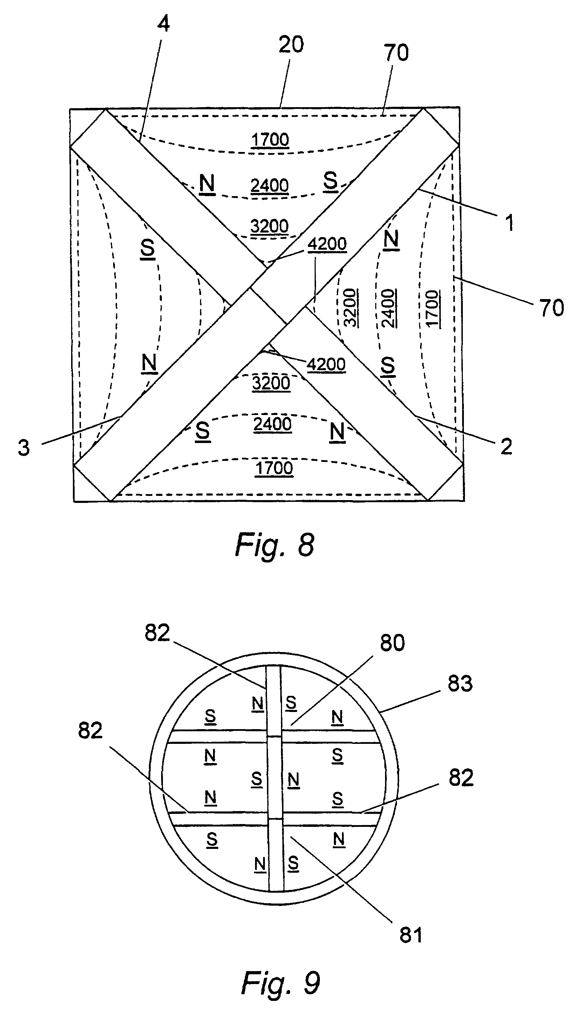

Fig. 8 shows typical values of magnetic flux density within the magnetic field generated by the apparatus of Fig. 3. It can be seen that the cruciform arrangement of magnets 1, 2, 3, 4 maintains a flux density of at least about 900 Gauss everywhere within the area bounded by lines 70 joining the external edges of the magnets. In contrast the flux density in the centre of the chamber 20 which would be achieved if the same magnets were positioned around the edge of the chamber would be only about 200 or 300 Gauss.

This increase in flux density means that there is an effective reduction in cost, since by placing the magnets in a radial arrangement within the chamber rather than placing them about the perimeter of a chamber, smaller, less powerful and therefore cheaper magnets may be used to achieve the same magnetic flux density.

Figs. 9 to 14 show alternative arrangements of magnets forming the fluid treatment device. In Fig. 9 there are two "nodes" 80, 81 or axes from which the magnets 82 project radially. Although Fig. 8 shows a circular sleeve 83, the arrangement shown is particularly suitable for sleeves of oval, elliptical or rectangular cross-section. The number of "nodes" could be increased to accommodate pipes or sleeves having a flatter cross-section.

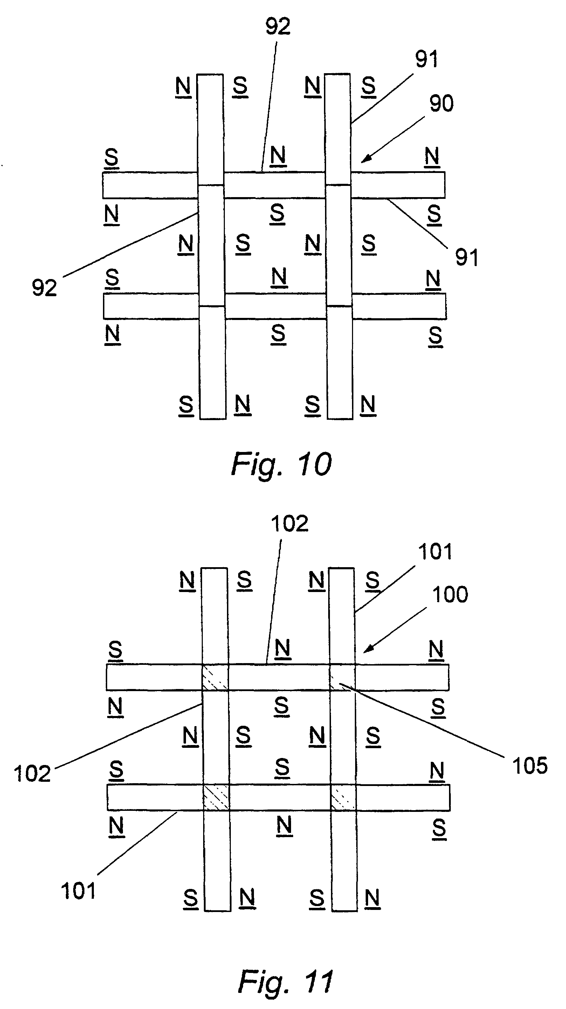

Figs. 10 to 14 show arrangements suitable for pipes or sleeves of larger diameter (not shown). In Figs. 10 and 11 there are four "nodes" 90, 100 or axes from which the magnets 91, 92, 101, 102 project radially.

In Fig. 11 spine pieces 105 of plastic are placed along the axes. The polarity of each magnet or of any combination of magnets may be reversed as required. In particular the polarity of each magnet 92, 102 forming the central square may be reversed alone or in combination with other magnets 92, 102 forming the central square.

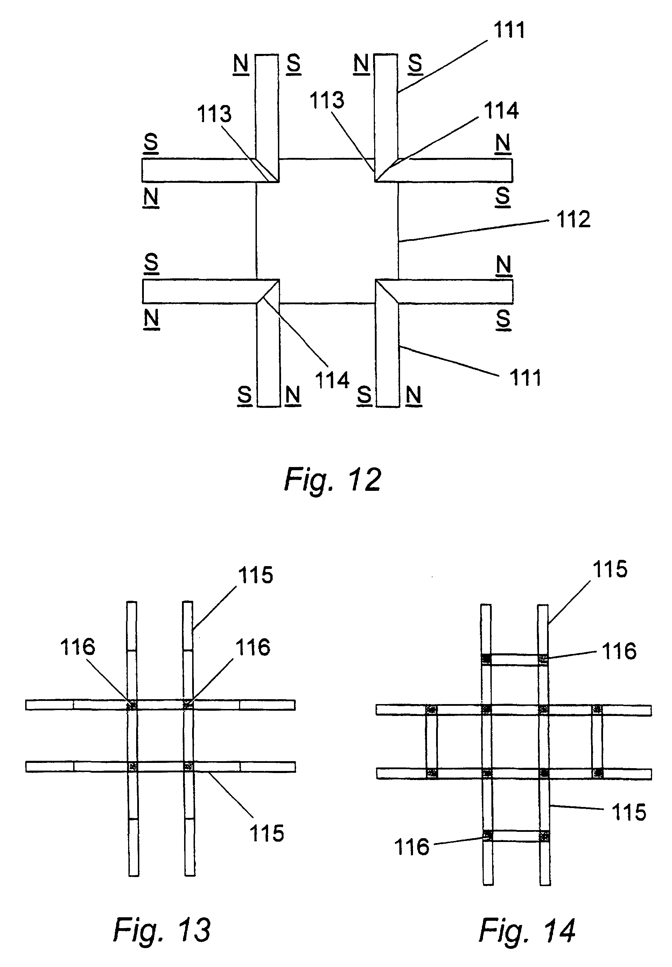

In the embodiment of Fig. 12 the magnets 92, 102 forming the central square are replaced by a plastic former 112. The remaining magnets 111 may be chamfered at their ends 114 so that they fit together within recesses 113 in the plastic former 112. The plastic former 112 may, instead of having recesses, simply abut the square ends of the magnets 111.

The arrangement of nodes with radial magnets extending therefrom may be extended in any direction, as shown in Figs. 13 and 14, which have plastic spine members 116 at each node where three or four magnets 115 meet. Similar networks of nodes are possible where three magnets meet at each node, forming triangular voids between the magnets, or where five, six or more magnets meet at each node, forming pentagonal, hexagonal or other polygonal voids between the magnets.

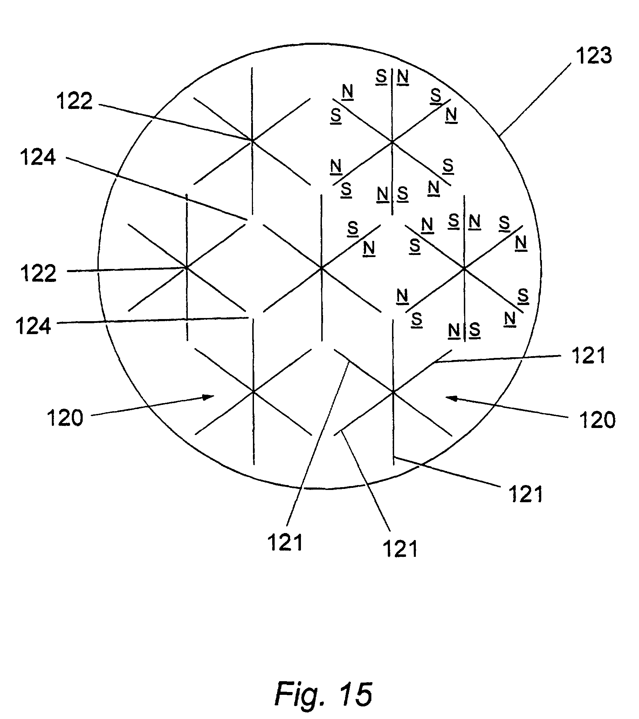

Fig. 15 shows a section through a device of the invention in which a number of arrangements 120, similar to that shown in Fig. 6 but each having 6 magnets 121 instead of 8 in each layer arranged about a point 122, are arranged in a honeycomb pattern within a sleeve 123. The effect is to create primary and secondary node points 124 at which three magnets 121 meet. This ensures that there are no "weak" areas within the sleeve at which the magnetic field is weak because of distance from a magnet.

The individual magnets 1-4, 11-14, 30, 40, 50, 60 are typically rare earth magnets, such as samarium cobalt or neodymium, which are readily available in sizes of up to about 30mm square and 5mm thickness or 60mm by 40mm rectangle and 10mm thickness. It is possible to use other magnets, such as ferrous magnets, ceramic magnets or electro-magnets.

The device consisting only of magnets may be inserted in an existing fuel line, using the existing pipe or tube as a chamber. It could be incorporated into a fuel filter, so that installation is as easy as replacing the fuel filter. It can be made very small using magnets of less than 5mm maximum dimensions. It can find a use in any process treating a fluid having free radicals, such as ionisation of fuel, purification of water or gases such as air and oxygen, treatment of liquid foodstuffs such as beer and detoxification of medical fluids such as blood. However the use of the device is not limited to use with any of the fluids mentioned herein.

These and other modifications and improvements can be incorporated without departing from the scope of the invention.

## Claims

1. Fuel treatment apparatus (25) comprising
- a chamber (20) having a first end and a second end and a longitudinal axis extending from the first end to the second end,
- a fuel inlet (23) and a fuel outlet (24) each communicating with said chamber, and
- at least three magnets (1-4, 11-14, 30, 40, 50) arranged radially about the longitudinal axis and adapted to apply a magnetic field within said chamber, wherein said magnets are substantially cuboid in shape having a thickness less than the two longer sides of the magnet,
wherein the magnets are arranged such that a first long side is parallel to said longitudinal axis and a second long side extends radially from said longitudinal axis, and wherein each face bounded by the first and second long sides is a north (N) or south (S) pole face, the magnets being arranged such that the north pole (N) of each magnet faces the south (S) pole of the adjacent magnet, and the south pole (S) of each magnet faces the north pole (N) of the adjacent magnet.

2. Apparatus according to Claim 1, wherein said magnets (1-4, 11-14, 30, 40, 50) are spaced equidistantly about said longitudinal axis.

3. Apparatus according to any preceding Claim, wherein the apparatus comprises a plurality of layers of magnets (1a-1e, 2a-2e, 3a-3e, 4a-4e), each layer comprising at least three magnets arranged radially about the longitudinal axis.

4. Apparatus according to Claim 3, wherein the magnets (1-4, 11-14, 30, 40, 50) in each layer are substantially planar and arranged to be coplanar with the magnets in the other layers.

5. Apparatus according to Claim 4, wherein the orientation of the magnets (1-4, 11-14, 30, 40, 50) in each layer is the reverse of that of the magnets in each adjacent layer, such that each north pole (N) of a magnet in one layer is adjacent to a south pole (S) of a magnet in an adjacent layer.

6. Apparatus according to. any preceding Claim, wherein the edge face (31, 41) of each magnet adjacent to the longitudinal axis is profiled to aid interconnection of the magnets.

7. Apparatus according to Claim 6, wherein the edge face (41) of each magnet is mitred or chamfered on one or both sides of the edge face.

8. Apparatus according to Claim 6, further comprising a spine member (33) extending along the longitudinal axis of the chamber, wherein the edge face (31) of each magnet adjacent to the axis is provided with an arcuate channel extending along the edge face and adapted to engage with the spine member (33).

9. Apparatus according to any preceding Claim, wherein there are four magnets (1-4, 11-14, 30) in each layer arranged in a cruciform pattern.

10. Fuel treatment apparatus (25) comprising
- a chamber (20) having a first end and a second end and a main longitudinal axis extending from the first end to the second end,
- a fuel inlet (23) and a fuel outlet (24) each communicating with said chamber, and
- a plurality of secondary axes (80, 81, 90, 100, 116, 122) extending within the chamber parallel to the main longitudinal axis,
- each said secondary axis having at least three magnets (1-4, 11-14, 30, 40, 50) arranged radially about said axis and adapted to apply a magnetic field within said chamber,
wherein said magnets are substantially cuboid in shape having a thickness less than the two longer sides of the magnet,
wherein the magnets are arranged such that a first long side is parallel to said secondary axis and a second long side extends radially from said secondary axis, and wherein each face bounded by the first and second long sides is a north (N) or south (S) pole face, the magnets being arranged such that the north pole (N) of each magnet faces the south (S) pole of the adjacent magnet, and the south pole (S) of each magnet faces the north pole (N) of the adjacent magnet.

11. Apparatus according to any preceding Claim, wherein the chamber is bounded by a casing (15) of impervious material.

12. Apparatus according to Claim 11 wherein the casing (15) is of non-magnetic material.

## Patentansprüche

1. Brennstoffaufbereitungsvorrichtung (25), bestehend aus:
- einer Kammer (20), die ein erstes Ende und ein zweites Ende und eine Längsachse, die sich vom ersten Ende zum zweiten Ende erstreckt, besitzt,
- einer BrennstoffeinlaßÖffnung (23) und einer Brennstoffauslaßöffnung (24), wobei beide in Verbindung mit dieser Kammer sind, und
- mindestens drei Magnete (1-4, 11-14, 30, 40, 50), die radial um die Längsachse angeordnet sind und so angepaßt sind, daß sie ein magnetisches Feld innerhalb dieser Kammer erzeugen,
wobei diese Magnete im wesentlichen quaderförmig sind und eine Dicke aufweisen, die schmäler als die zwei längeren Seiten des Magnets ist,
wobei die Magnete so angeordnet sind, daß eine erste lange Seite parallel zu der Längsachse liegt und eine zweite lange Seite sich radial von der Längsachse erstreckt und wobei jede Fläche, die durch die erste und zweite lange Seite begrenzt wird, eine Nordpolfläche (N) oder eine Südpolfläche (S) ist, wobei die Magnete so angeordnet sind, daß der Nordpol (N) jedes Magnets dem Südpol (S) des angrenzenden Magnets gegenüberliegt, und der Südpol (S) jedes Magnets dem Nordpol (N) des angrenzenden Magnets gegenüberliegt.

2. Vorrichtung gemäß Anspruch 1, wobei diese Magnete (1-4, 11-14 30, 40, 50) mit gleichem Abstand um die Längsachse angeordnet werden.

3. Vorrichtung gemäß einem der vorhergehenden Ansprüche, wobei die Vorrichtung aus einer Vielzahl von Magnetschichten (1a-1e, 2a-2e, 3a-3e, 4a-4e) besteht, wobei jede Schicht aus mindestens drei Magneten besteht, die radial um die Längsachse angeordnet sind.

4. Vorrichtung gemäß Anspruch 3, wobei die Magnete (1-4, 11-14, 30, 40, 50) in jeder Schicht im wesentlichen planar sind und so angeordnet werden, daß sie komplanar mit den Magneten in den anderen Schichten sind.

5. Vorrichtung gemäß Anspruch 4, wobei die Ausrichtung der Magneten (1-4, 11-14, 30, 40, 50) in jeder Schicht umgekehrt zu denjenigen der Magneten in jeder angrenzenden Schicht ist, so daß jeder Nordpol (N) eines Magnets in einer Schicht angrenzend an einen Südpol (S) eines Magnets in einer angrenzenden Schicht ist.

6. Vorrichtung gemäß einem der vorhergehenden Ansprüche, wobei die Kantenfläche (31, 41) jedes an die Längsachse angrenzenden Magnets profiliert ist, um eine Verkopplung der Magneten zu ermöglichen.

7. Vorrichtung gemäß Anspruch 6, wobei die Kantenfläche (41) jedes Magnets an einer oder beiden Seiten der Kantenfläche auf Gehrung geschnitten oder abgeschrägt wird.

8. Vorrichtung gemäß Anspruch 6, weiter bestehend aus einem Rückenteil (33), der sich entlang der Längsachse der Kammer erstreckt, wobei die Kantenfläche (31) jedes an die Achse angrenzenden Magnets mit rundkantigem U-Stahl versehen ist, der sich entlang der Kantenfläche erstreckt und so angepaßt ist, daß er in das Rückenteil (33) eingreift.

9. Vorrichtung gemäß einem der vorhergehenden Ansprüche, wobei es vier Magnete (1-4, 11-14, 30) gibt, die in jeder Schicht in einem kreuzförmigen Muster angeordnet werden.

10. Brennstoffaufbereitungsvorrichtung (25), bestehend aus:
- einer Kammer (20), die ein erstes Ende und ein zweites Ende und eine Längsachse, die sich vom ersten Ende zum zweiten Ende erstreckt, besitzt,
- einer Brennstoffeinlaßöffnung (23) und einer Brennstoffauslaßöffnung (24), wobei beide in Verbindung mit der Kammer sind, und
- einer Vielzahl von Sekundärachsen (80, 81, 90,100,116,122), welche sich innerhalb der Kammer parallel zu der Hauptlängsachse erstrecken,
- wobei jede Sekundärachse mindestens drei Magnete (1-4, 11-14, 30, 40, 50) besitzt, die radial um diese Achse angeordnet werden und so angepaßt sind, daß sie ein magnetisches Feld innerhalb dieser Kammer erzeugen,
wobei diese Magnete im wesentlichen quaderförmig sind und eine Dicke aufweisen, die schmäler als die zwei längeren Seiten des Magnets ist,
wobei die Magnete so angeordnet sind, daß eine erste lange Seite parallel zu der Sekundärachse liegt und eine zweite lange Seite sich radial von der Sekundärachse erstreckt und wobei jede Fläche, die durch die erste und zweite lange Seite begrenzt wird, eine Nordpolfläche (N) oder eine Südpolfläche (S) ist, wobei die Magnete so angeordnet werden, daß der Nordpol (N) jedes Magnets dem Südpol (S) des angrenzenden Magnets gegenüberliegt, und der Südpol (S) jedes Magnets dem Nordpol (N) des angrenzenden Magnets gegenüberliegt.

11. Vorrichtung gemäß einem der vorhergehenden Ansprüche, wobei die Kammer von einem Gehäuse (15) aus undurchlässigem Material umgeben ist.

12. Vorrichtung gemäß Anspruch 11, wobei das Gehäuse (15) aus einem nicht-magnetischen Material ist.

## Revendications

1. Appareil de traitement de combustible (25) comprenant
- une chambre (20) ayant une première extrémité et une seconde extrémité et un axe longitudinal s'étendant depuis la première extrémité jusqu'à la seconde extrémité,
- un orifice d'admission de combustible (23) et un orifice d'évacuation de combustible (24) communiquant chacun avec ladite chambre, et
- au moins trois aimants (1 à 4, 11 à 14, 30, 40, 50) agencés de façon radiale autour de l'axe longitudinal et prévus pour appliquer un champ magnétique au sein de ladite chambre,
dans lequel lesdits aimants sont de configuration sensiblement cuboïde et ont une épaisseur qui est inférieure aux deux côtés les plus longs de l'aimant,
dans lequel les aimants sont agencés de telle sorte qu'un premier long côté est parallèle audit axe longitudinal et un second long côté s'étend de façon radiale depuis ledit axe longitudinal, et dans lequel chaque face bordée par les premier et second longs côtés est une face polaire nord (N) ou sud (S), les aimants étant agencés de telle sorte que le pôle nord (N) de chaque aimant fait face au pôle sud (S) de l'aimant adjacent, et le pôle sud (S) de chaque aimant fait face au pôle nord (N) de l'aimant adjacent.

2. Appareil selon la revendication 1, dans lequel lesdits aimants (1 à 4, 11 à 14, 30, 40, 50) sont espacés à égale distance les uns des autres autour dudit axe longitudinal.

3. Appareil selon n'importe quelle revendication précédente, dans lequel l'appareil comprend une pluralité de couches d'aimants (1a à 1e, 2a à 2e, 3a à 3e, 4a à 4e), chaque couche comprenant au moins trois aimants agencés de façon radiale autour de l'axe longitudinal.

4. Appareil selon la revendication 3, dans lequel les aimants (1 à 4, 11 à 14, 30, 40, 50) dans chaque couche sont sensiblement plans et agencés de façon à être coplanaires avec les aimants dans les autres couches.

5. Appareil selon la revendication 4, dans lequel l'orientation des aimants (1 à 4, 11 à 14, 30, 40, 50) dans chaque couche est l'inverse de celle des aimants dans chaque couche adjacente, de telle sorte que chaque pôle nord (N) d'un aimant dans une couche est adjacent à un pôle sud (S) d'un aimant dans une couche adjacente.

6. Appareil selon n'importe quelle revendication précédente, dans lequel la face d'arête (31, 41) de chaque aimant adjacente à l'axe longitudinal est profilée de façon à contribuer à l'interconnexion des aimants.

7. Appareil selon la revendication 6, dans lequel la face d'arête (41) de chaque aimant est en onglet ou chanfreinée sur un côté ou sur les deux côtés de la face d'arête.

8. Appareil selon la revendication 6, comprenant de plus un élément formant colonne (33) s'étendant le long de l'axe longitudinal de la chambre, dans lequel une gorge arquée, laquelle s'étend le long de la face d'arête et est prévue pour se mettre en prise avec l'élément formant colonne (33), est pratiquée dans la face d'arête (31) de chaque aimant adjacente à l'axe.

9. Appareil selon n'importe quelle revendication précédente, dans lequel il y a quatre aimants (1 à 4, 11 à 14, 30) agencés en forme de croix dans chaque couche.

10. Appareil de traitement de combustible (25) comprenant
- une chambre (20) ayant une première extrémité et une seconde extrémité, et un axe longitudinal principal s'étendant depuis la première extrémité jusqu'à la seconde extrémité,
- un orifice d'admission de combustible (23) et un orifice d'évacuation de combustible (24) communiquant chacun avec ladite chambre, et
- une pluralité d'axes secondaires (80, 81, 90, 100, 116, 122) s'étendant au sein de la chambre parallèlement à l'axe longitudinal principal,
- chacun desdits axes secondaires ayant au moins trois aimants (1 à 4, 11 à 14, 30, 40, 50) agencés de façon radiale autour dudit axe et prévus pour appliquer un champ magnétique au sein de ladite chambre,
dans lequel lesdits aimants sont de configuration sensiblement cuboïde et ont une épaisseur qui est inférieure aux deux côtés les plus longs de l'aimant,
dans lequel les aimants sont agencés de telle sorte qu'un premier long côté est parallèle audit axe secondaire et un second long côté s'étend de façon radiale depuis ledit axe secondaire, et dans lequel chaque face bordée par les premier et second longs côtés est une face polaire nord (N) ou sud (S), les aimants étant agencés de telle sorte que le pôle nord (N) de chaque aimant fait face au pôle sud (S) de l'aimant adjacent, et que le pôle sud (S) de chaque aimant fait face au pôle nord (N) de l'aimant adjacent.

11. Appareil selon n'importe quelle revendication précédente, dans lequel la chambre est bordée par un boîtier (15) en matériau étanche.

12. Appareil selon la revendication 11 dans lequel le boîtier (15) est en matériau non magnétique.
